# EUROPEAN PATENT APPLICATION

(11) **EP 3 372 940 A1**
(43) Date of publication of application: **12.09.2018**
(21) Application number: 17159695.0
(22) Date of filing: 07.03.2017
(51) Int. Cl.: F28F 3/02, F02B 29/04, F28D 7/16

(54) **A HEAT EXCHANGER AND A METHOD TO PRODUCE AN OFFSET STRIP FIN FOR THE HEAT EXCHANGER**

(71) Applicant: Mahle International GmbH, 70376 Stuttgart (DE)
(72) Inventor: Ayad, Fadil, 57685 Augny (FR); Bouvier, Joel, F-08140 Daigny (FR); Krzeminski, Michal, 62-800 Kalisz (PL); Maleszka, Michal, 63-400 Ostrow Wielkopolski (PL)
(74) Representative: BRP Renaud & Partner mbB Rechtsanwälte Patentanwälte Steuerberater

(57) **Abstract**

The invention relates to a heat exchanger (1) comprising a housing (4) and an alternating bundle formed by a plurality of offset strip fins (2) for guiding a coolant flow and by a plurality of flat tubes (3) for guiding a gas flow,
- wherein the bundle is arranged in the housing (4),
- wherein the housing (4) comprises a gas inlet (5) and a gas outlet (6), which are arranged at opposing longitudinal ends of the housing (4) with respect to a longitudinal direction (7) of the housing (4),
- wherein the housing (4) comprises at least one coolant inlet (8) and at least one coolant outlet (9),
- wherein at least one of said offset strip fins (2) contains a strip fin structure (12),
- wherein the strip fin structure (12) defines an easy flow direction (15) and a hard flow direction (16),
- wherein the easy flow direction (15) and hard flow direction (16) have different orientations,
- wherein the hard flow direction (16) has a higher flow resistance for the coolant flow than the easy flow direction (15), and
- wherein the respective offset strip fin (2) is arranged such, that the easy flow direction (15) extends parallel to the longitudinal direction (7).

## Description

The present invention relates to a heat exchanger of a tube bundle type comprising a housing and an alternating bundle formed by a plurality of offset strip fins for guiding a coolant flow and by a plurality of flat tubes for guiding a gas flow.

The heat exchangers are used in motor vehicles for example as charge air coolers, so called "intercooler". The gas is cooled by transfer of heat from the hot gas to the colder coolant. In order to make the exchange of heat as efficient as possible, said heat exchangers are typically formed as an alternating bundle by a plurality of offset strip fins for guiding a coolant flow and by a plurality of flat tubes for a guiding of a gas flow. In the offset strip fin a plurality of fins is arranged in a row and a plurality of the said rows with the said fins is arranged in such a way, that the fins have an offset to each other in the neighboring rows. The flat tubes have an inner fin structure as well and in this way, the area available for the thermal interaction is maximized.

The alternating bundle is arranged in the housing, wherein the housing comprises a gas inlet and a gas outlet and, in addition, a coolant inlet and a coolant outlet. The gas inlet and the gas outlet are arranged at opposing longitudinal ends of the housing and the coolant inlet and the coolant outlet are arranged at opposing lateral connection sides or at the same lateral connection side of the housing. So the coolant flow and the gas flow have opposite direction to each other to maximize the heat transfer between the gas and the coolant.

The offset strip fins of the heat exchanger contain a strip fin structure that defines a plurality of coolant paths through which the coolant flows. The strip fin structure defines an easy flow direction and a hard flow direction, wherein the easy flow direction and the hard flow direction have different orientations. The flow direction of the coolant through the coolant path depends on the coolant velocity. If the coolant velocity is low, the hard flow direction with a relatively high flow resistance is used, and if the coolant velocity is high, the easy flow direction with a relatively low flow resistance is preferred.

DE 10 2012 006 346 B4 and DE 10 2005 036 601 A1 describe for example some heat exchangers of this type. The flow behavior of the coolant in the offset strip fin in such conventional heat exchangers defines three flow zones. The first flow zone is defined as an area on the coolant inlet where the coolant flows from the coolant inlet into the offset strip fin. The coolant flows here in the easy flow direction and is spread in the individual coolant paths. The second flow zone is defined as an area with a main flow direction of the coolant in the offset strip fin. The coolant flows here through the coolant paths in the hard flow direction. After that the coolant passes the third flow zone in which the coolant flows into coolant outlet in the easy flow direction.

In order to reduce the dimensions of the heat exchanger, the number of the offset strip fins and of the flat tubes can be reduced. In this case, the same volume of the coolant and of the gas has to flow through the reduced number of paths. The coolant velocity increases, which leads to a pressure increase in the hard flow direction of the offset strip fin. In this case, the maximal coolant pressure is easily exceeded and it leads to mechanical destructions of the heat exchanger.

The object of the present invention is to provide an exchanger in which the above described disadvantages are avoided.

This object is achieved by the subject matter of the independent patent claims. Preferred embodiments are the subject matter of the dependent patent claims. The basic concept of the invention is to arrange the offset strip fin such that the easy flow direction extends parallel to the longitudinal direction. Preferably, the easy flow direction and the hard flow direction are arranged approximately perpendicular to each other. In this case, the easy flow direction is arranged along and the hard flow direction is arranged across to the longitudinal direction of the heat exchanger. The coolant also flows in the first flow zone from the coolant inlet into the offset strip fin in the hard flow direction and is spread in the coolant paths. Thereafter the coolant flows in the easy flow direction that extends parallel to the longitudinal direction and passes the second flow zone. Afterwards the coolant flows in the third flow zone in the hard flow direction into the coolant outlet. The coolant flows also in the second flow zone in the easy flow direction. Of this reason the pressure increase in the second flow zone and the mechanical destruction of the heat exchanger are avoided.

In an advantageous development, the offset strip fin comprises at least one recess area. The recess area can be formed on the offset strip fin by an opening in the offset strip fin; the material of the offset strip fin can be either completely removed, for example punched, or flattened (material without strip fin structure). To retain the stiffness of the offset strip fin the recess area can alternatively be formed as an area without any strip fin structure.

The recess area does not contain the strip fin structure, so that the resistance for the coolant flow decreases. The pressure in areas where the coolant flows in the hard flow directions can also be minimalized and the total pressure in the heat exchanger can be reduced. To control the pressure reducing in the offset strip fin the form and the size of the recess area can be fit to the heat exchanger size or to the allowed pressure maximum. So the recess area can be rectangular or round or oblong or else and the extent and the cross sectional area of the recess area can vary. Therefore the pressure increase in the offset strip fin and the mechanical destruction of the heat exchanger are avoided.

In a further development, the recess area is arranged inside the offset strip fin. The recess area does also not border to one of the border of the offset strip fin so that the offset strip fin remains complete. This simplifies the handling of the offset strip fin during the stacking process of the heat exchanger.

In an advantageous development, the recess area is arranged at the coolant inlet and/or at the coolant outlet. Therefore the recess area is arranged in the first and/or in the third flow zone of the offset strip fin to reduce the pressure in these flow zones. So the coolant flows in the first flow zone trough the recess area and the pressure of the coolant in the heat exchanger is reduced. After the coolant passes the second flow zone where the coolant flows in the easy flow direction the coolant passes the third flow zone with a second recess area. Consequently the pressure in the heat exchanger is reduced.

The form of the recess area can be different, but in an advantageous development, the recess area has a rectangular form and extends parallel to the hard flow direction. In this case, the coolant flows and spreads in the longitudinal direction more intensive and therefore, the complete area of the offset strip fin is used for the coolant flow. As a result a better heat transfer between the gas and the coolant can be reached. The length of the recess area can be for example about 75% of the length of the offset strip fin in the hard flow direction.

In an advantageous development, the offset strip fin comprises at least one flattened area. The flattened area produced for example by a machine press contains a flattened strip fin structure and the coolant can flow over the strip fin structure so that the pressure in the offset strip fin decreases. The form of the flattened area can be for example rectangular or round or oblong or else and the extent and the cross sectional area of the flattening can be fit to the heat exchanger size or to the allowed pressure maximum. Therefore the pressure in the offset strip fin can be reduced and the size of the heat exchanger can be adjusted to the requirements.

In a further embodiment, the flattened area is arranged at the coolant inlet and/or at the coolant outlet. Therefore the high pressure difference by the coolant passing between the coolant inlet or the coolant outlet and the offset strip fin can be reduced.

Furthermore, the flattened area can be arranged between the coolant inlet and/or the coolant outlet and the recess area, so that the flattened area borders to at least one border of the offset strip fin and to the recess area. In this case the pressure in the hard flow direction on the offset strip fin can be reduced, but the offset strip fin remains complete.

In an advantageous development, the offset strip fin contains of aluminium or of an aluminium alloy. Aluminium is an inexpensive and well deformable metal that is suitable for the producing the strip fin structure on the offset strip fin for example by a rolling process.

The invention furthermore relates to a method of producing the offset strip fin according to the above-explained heat exchanger. The method comprising the steps of forming of the recess area; forming of the strip fin structure; cutting of the offset strip fin to size and flattening of the strip fin structure to form the flattened area.

In an advantageous development, the forming of the recess area is carried out at first. After that the other steps can be carried out to form the strip fin structure, to flatten the said strip fin structure and to cut the offset strip fin to size.

The recess area can be formed on the offset strip fin by an opening in the offset strip fin. In this case the material is completely removed, for example punched. To retain the stiffness of the offset strip fin the recess area can alternatively be formed as an area without any strip fin structure. In this case some forming on the offset strip fin is cancelled.

In a further embodiment, the forming of the strip fin structure is carried out at first. The strip fin structure can be formed for example by a rolling process. In this case, the recess area and the flattened area can be formed after the strip fin structure is finished. In this embodiment, the complete offset strip fin becomes the strip fin structure before cutting the offset strip fin to size, so that the forming can be carried out on an assembly line to reduce the production time and costs.

In a further embodiment, the cutting of the offset strip fin to size is curried out simultaneously to the flattening of the strip fin structure or to the forming of the recess area. In this embodiment the forming of the offset strip fin can reduce the production time and costs.

Further important features and advantages of the invention emerge from the dependent claims, from the drawings and from the associated description of the figures with reference to the drawings.

It goes without saying that the features mentioned above and those which have yet to be explained below are usable not only in the respectively stated combination, but also in different combinations or on their own without departing from the scope of the present invention.

Preferred exemplary embodiments of the invention are illustrated in the drawings and are explained in more detail in the description below.

In the drawings, in each case schematically:
- Fig. 1: shows a heat exchanger in a perspective illustration;
- Fig. 2: shows an offset strip fin with a strip fin structure in a perspective illustration;
- Fig. 3: shows an offset strip fin with coolant flow directions in a top view;
- Fig. 4: shows an offset strip fin with recess areas and with flattened areas;
- Fig. 5: shows another offset strip fin with recess areas and with flattened areas;
- Fig. 6 to 12: show a method of producing the offset strip fin.

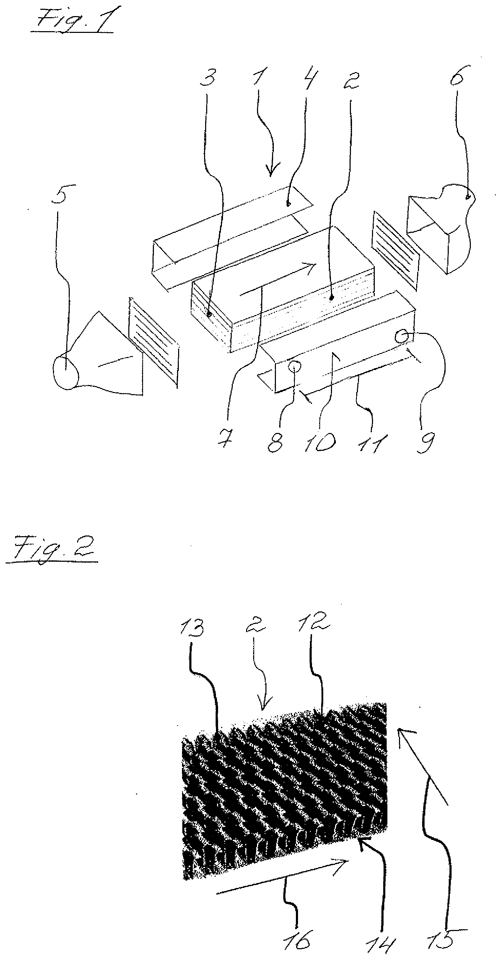

Fig. 1 shows schematically a heat exchanger 1 in a perspective illustration. The heat exchanger 1 is formed as an alternating bundle by a plurality of offset strip fins 2 for guiding a coolant flow and by a plurality of flat tubes 3 for guiding a gas flow. In the offset strip fin 2 a plurality of fins is arranged in a row and a plurality of the said rows with the said fins is arranged in such a way, that the fins have an offset to each other in the neighboring rows. The gas is cooled by transfer of heat from the hot gas to the colder coolant.

The heat exchanger 1 contains a housing 4 in which the bundle of the offset strip fins 2 and flat tubes 3 are arranged. To lead the gas through the flat tubes 3 the heat exchanger 1 contains a gas inlet 5 and a gas outlet 6, which are arranged at opposing longitudinal ends of the housing 4 with respect to a longitudinal direction 7 of the housing 4. A coolant inlet 8 and a coolant outlet 9 enable guiding of the coolant through the offset strip fins 2. In this development, the coolant inlet 8 and the coolant outlet 9 are arranged at a lateral connection side 10 of the housing 4 and have a longitudinal distance 11 to each other.

Fig. 2 shows schematically the offset strip fin 2 with a strip fin structure 12 in a perspective illustration. The strip fin structure 12 contains a plurality of small fins 13 arranged in a plurality of strips 14. The strip fin structure 12 defines an easy flow direction 15 along the strip fin structure 12 and a hard flow direction 16 across the strip fin structure 12.

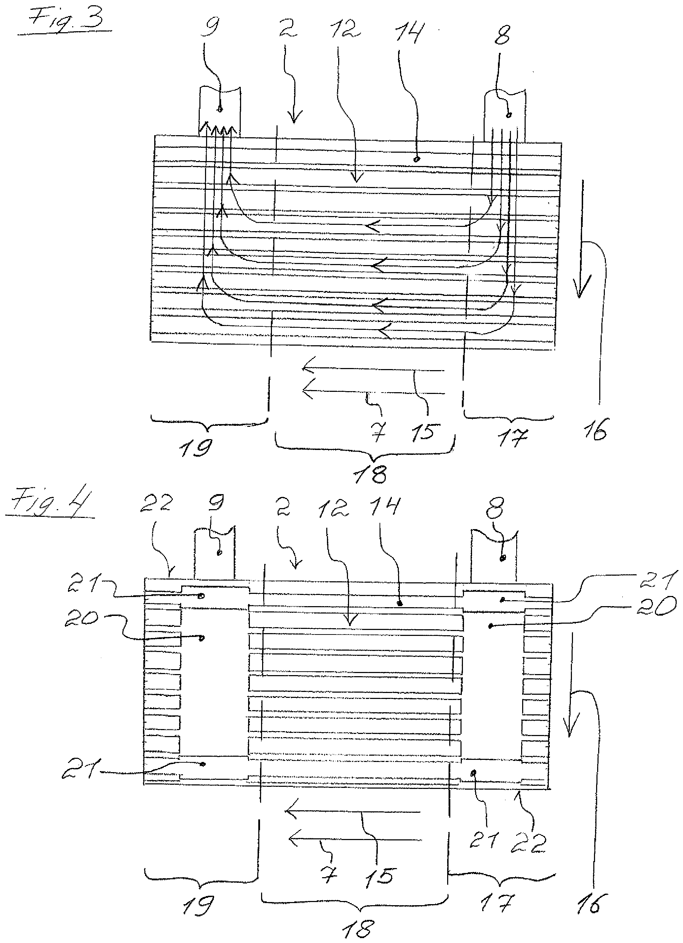

Fig. 3 shows schematically an offset strip fin 2 with coolant flow directions 15 and 16 in a top view. The strip fin structure 12 is arranged in the longitudinal direction 7. The flow behavior of the coolant in the offset strip fin 2 defines three flow zones. A first flow zone 17 is defined as area on the coolant inlet 8 where the coolant flows from the coolant inlet 8 into the offset strip fin 2. The coolant flows here in the hard flow direction 16 and is spread in the coolant paths. A second flow zone 18 is defined as the area with a main flow direction of the coolant in the offset strip fin 2. The coolant flows here through the coolant paths in the easy flow direction 15. After that the coolant passes a third flow zone 19 in which the coolant flows out into coolant outlet 9 in the hard flow direction 16. The coolant flows also in the second flow zone 18 in the easy flow direction 15 and of this reason the pressure increase in the second flow zone 18 and the mechanical destruction of the strip fin structure 12 are avoided.

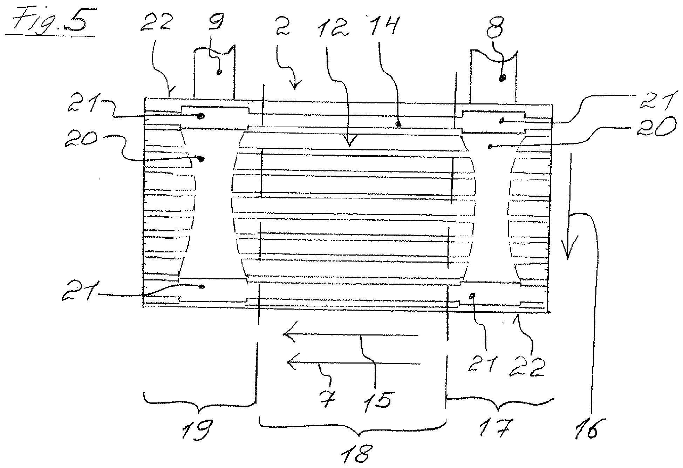

Fig. 4 and Fig. 5 show schematically the offset strip fin 2 with recess areas 20 and flattened areas 21. The recess area 20 can be formed on the offset strip fin 2 by an opening in the offset strip fin 2. The form of the recess area 20 is in Fig. 4 rectangular and in Fig. 5 oblong and extends parallel to the hard flow direction 16.

The recess areas 20 do not contain the strip fin structure 12, so that the resistance for the coolant flow decreases. The recess areas 20 are arranged in the first flow zone 17 on the coolant inlet 8 and in the third flow zone 19 on the coolant outlet 9 to reduce the pressure in these zones. So the coolant flows in the first flow zone 17 through the first recess area 20 and the pressure of the coolant is here reduced. After the coolant passes the second flow zone 18 where the coolant flows in the easy flow direction 15 along the strip fin structure 12 the coolant passes the third flow zone 19 with the second recess area 20.

The recess areas 20 are arranged inside the offset strip fin 2 so that the offset strip fin 2 remains complete. This simplifies the handling of the offset strip fin 2 during the stacking process of the heat exchanger 1.

The offset strip fin 2 comprises additionally the flattened areas 21. The flattened areas 21 contain the flattened strip fin structure 12 and the coolant can flows at least partially over the strip fin structure 12 so that the pressure in the offset strip fin 2 decreases. The extent of the flattening can be fit to the size of the heat exchanger 1 or to the allowed pressure maximum.

In this embodiment, the flattened areas 21 are arranged between the recess areas 20 and the coolant inlet 8, coolant outlet 9 and a border 22 to reduce the pressure in hard flow direction 16 on the offset strip fin 2.

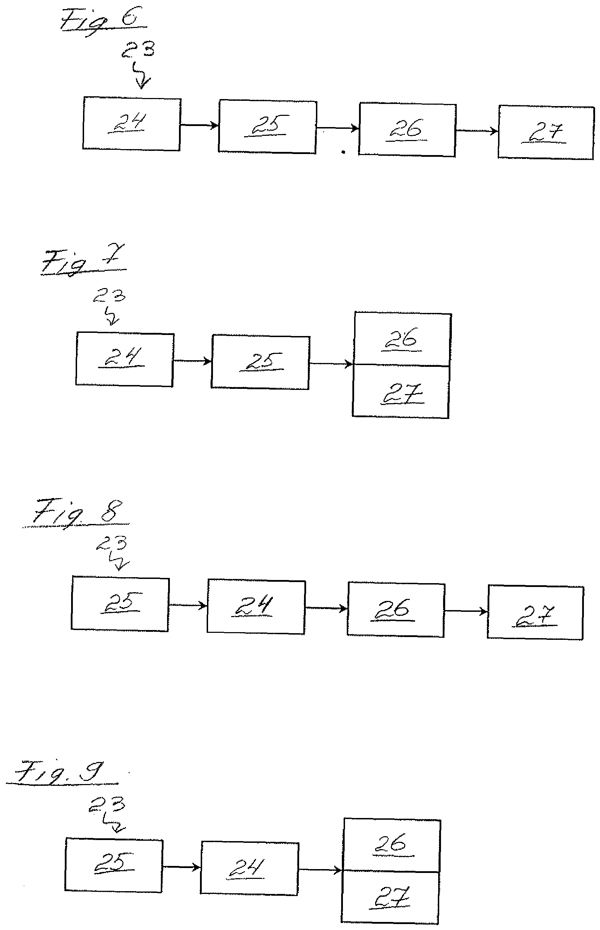

Fig. 6 shows schematically a method 23 of producing the offset strip fin 2 for the above-explained heat exchanger 1. The method 23 comprises the follow steps: forming of the recess area 24; forming of the strip fin structure 25; cutting of the offset strip fin to size 26 and flattening of the strip fin structure 27 to form the flattened area 21. The method 23 can be performed for example on an aluminium strip. In this case the offset strip fin 2 can be produced on an assembly line to reduce the production costs and time.

In this development, the forming of the recess area 24 is carried out at first. The recess area 20 can be formed on the aluminium strip by an opening. In this case the material is completely removed. In the next step, the strip fin structure 12 is formed 25 on the aluminium strip for example by a rolling process. Thereafter the aluminium strip is cut in the step of the cutting of the offset strip fin to size 26 to form a separate offset strip fin 2. Finally, the flattened area 21 is formed 27 on the offset strip fin 2 for example by a press machine.

Fig. 7 shows schematically the method 23, wherein the cutting of the offset strip fin to size 26 and the flattening of the strip fin structure 27 are curried out simultaneously. In this case, the production time and the production costs can be reduced.

Fig. 8 shows schematically the method 23, in which the forming of the strip fin structure 25 on the aluminium strip is curried out at first. After this step, the recess area 20 is formed 24 for example by a punching process and afterwards the aluminium strip is cut 26 to separate offset strip fins 2 and the flatted areas 21 are forming 27. Fig. 9 shows schematically the method 23, wherein the last two steps of the method shown in Fig. 8 are curried out simultaneously.

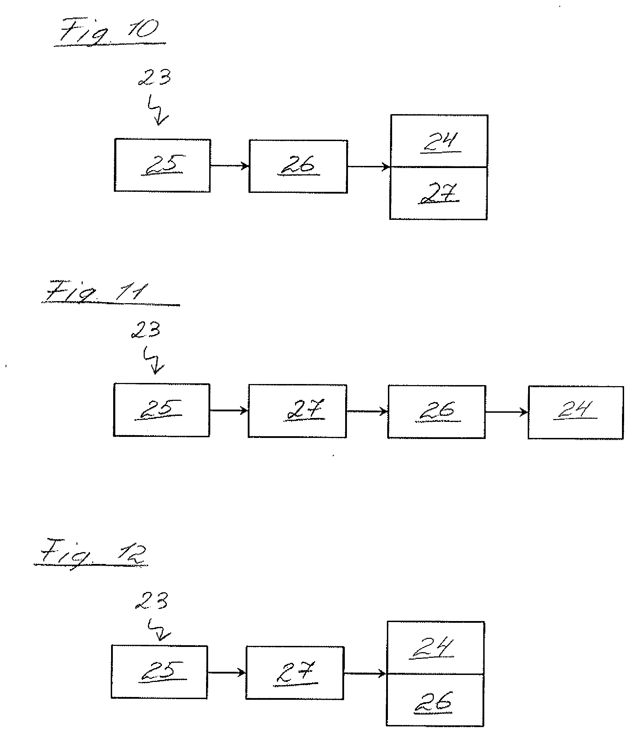

Fig. 10 shows schematically the method 23, wherein the cutting of the offset strip fin to size 26 is curried out after the forming of the strip fin structure 25 on the aluminium strip. The flattening of the strip fin structure 27 to form the flattened area 21 is here carried out simultaneously to the forming of the recess area 24.

Fig. 11 shows schematically the method 23, in which the flattening of the strip fin structure 27 is curried out before the forming of the recess area 24 and the cutting of the offset strip fin to size 26. In this development the recess area 21 is formed 24 finally. Fig. 12 shows schematically the method 23, wherein the last steps of the method shown in Fig. 11 are curried out simultaneously.

## Claims

1. A heat exchanger (1) comprising a housing (4) and an alternating bundle formed by a plurality of offset strip fins (2) for guiding a coolant flow and by a plurality of flat tubes (3) for guiding a gas flow,
- wherein the bundle is arranged in the housing (4),
- wherein the housing (4) comprises a gas inlet (5) and a gas outlet (6), which are arranged at opposing longitudinal ends of the housing (4) with respect to a longitudinal direction (7) of the housing (4),
- wherein the housing (4) comprises at least one coolant inlet (8) and at least one coolant outlet (9),
- wherein at least one of said offset strip fins (2) contains a strip fin structure (12),
- wherein the strip fin structure (12) defines an easy flow direction (15) and a hard flow direction (16),
- wherein the easy flow direction (15) and the hard flow direction (16) have different orientations, and
- wherein the hard flow direction (16) has a higher flow resistance for the coolant flow than the easy flow direction (15),
**characterized in that** the respective offset strip fin (2) is arranged such, that the easy flow direction (15) extends parallel to the longitudinal direction (7).

2. The heat exchanger (1) according to claim 1, **characterized in that** the respective offset strip fin (2) comprises at least one recess area (20).

3. The heat exchanger (1) according to claim 2, **characterized in that** the recess area (20) is an opening in the offset strip fin (2).

4. The heat exchanger (1) according claim 2 or 3, **characterized in that** the recess area (20) is arranged inside the offset strip fin (2).

5. The heat exchanger (1) according to one of claims 2 to 4, **characterized in that** the recess area (20) is arranged at the coolant inlet (8) and/or at the coolant outlet (9).

6. The heat exchanger (1) according to one of claims 2 to 5, **characterized in that** the recess area (20) has a rectangular form and extends parallel to the hard flow direction (16).

7. The heat exchanger (1) according to claim 6, **characterized in that** the length of the recess area (20) is about 75% of the length of the offset strip fin (2) in respect to the hard flow direction (16).

8. The heat exchanger (1) according to one of the preceding claims, **characterized in that** the offset strip fin (2) comprises at least one flattened area (21).

9. The heat exchanger (1) according to claim 8, **characterized in that** the flattened area (21) is arranged at the coolant inlet (8) and/or at the coolant outlet (9).

10. The heat exchanger (1) according to claim 8 or 9, **characterized in that** the flattened area (21) is arranged between the coolant inlet (8) and/or the coolant outlet (9) and the recess area (20).

11. The heat exchanger (1) according to one of claims 8 to 10, **characterized in that** the flattened area (21) borders to at least one border (22) of the offset strip fin (2) and/or to the recess area (20).

12. The heat exchanger (1) according to one of the preceding claims, **characterized in that** the offset strip fin (2) contains of the aluminium or of an aluminum alloy.

13. A method (23) of producing the offset strip fin (2) for the heat exchanger (1) according to one of the preceding claims 1 to 12, comprising the steps of:
- Forming of the recess area (24);
- Forming of the strip fin structure (25);
- Cutting of the offset strip fin to size (26);
- Flattening of the strip fin structure (27) to form the flattened area (21).

14. The method (23) according to claim 13, **characterized in that** the forming of the recess area (24) is carried out at first or the forming of the strip fin structure (25) is carried out at first.

15. The method (23) according to claim 13 or 14, **characterized in that** the cutting of the offset strip fin to size (26) is curried out simultaneously to the flattening of the strip fin structure (27) or to the forming of the recess area (24).
